# EUROPEAN PATENT SPECIFICATION

(11) **EP 2 502 488 B1**
(45) Date of publication and mention of the grant of the patent: **09.11.2016**
(21) Application number: 11425074.9
(22) Date of filing: 23.03.2011
(51) Int. Cl.: A01J 5/10

(54) **Pulsator for milking plants**
Pulsator für Melkanlagen
Pulsateur pour installations de traite

(43) Date of publication of application: 26.09.2012
(73) Proprietor: Interpuls S.P.A., 42020 Albinea (RE) (IT)
(72) Inventor: Nicolini, Gabriele, 42020 Albinea (RE) (IT); Sicuri, Roberto, 43100 Parma (IT)
(74) Representative: Robba, Pierpaolo

(56) References cited:
- DE-B- 1 045 713
- US-A- 1 891 983
- US-A- 2 340 454
- US-A- 2 664 095

## Description

### Technical field

The present invention relates to a pulsator for milking plants.

A pulsator for milking plants is, generally, a device transmitting a pulsation signal to associated pulsation chambers in a milking unit. Each pulsation chamber consists of the space existing between an individual barrel of the milking unit and the respective elastic sheath enclosed therein, each sheath being intended to receive a teat of the animal to be milked. The desired movement of the sheath, enabling milking execution, is generated by means of said pulsation signal.

### Prior art

As is well known to those skilled in the art, the pulsator plays a fundamental role in a milking plant, as its performance directly influences the quality of the milking operation.

At present, two categories of pulsators are known, namely pneumatic pulsators and electronic pulsators. Moreover, the pulsators can be of a kind directly taking air from the outer environment, or of the kind receiving air from a source of clean air through a suitable duct. Especially, but not exclusively, when air is taken from the outer environment, the pulsator includes air filtering means, to avoid entry of insects and dust, which could compromise the good operation of the device.

A pneumatic pulsator is disclosed in EP-A-0009282. Such a pulsator has a body including a base and two parallel side walls projecting from the base and integrally formed therewith. Each side wall houses a respective elastic membrane of which the edge is pressed against the wall by means of a respective side cover. The rectilinear reciprocation of a slide valve allows cyclically putting in communication a vacuum source with the output channels through which the pulsation signal is transmitted. The displacement of the slide valve is achieved by means of a pneumatic actuating device comprising a shaft of which the axis is directed along the direction of displacement of the slide valve. Each end of the shaft is slidably supported in air-tight manner by a corresponding side wall. The elastic membranes define, together with the wall, a chamber surrounding the hole in the wall where the corresponding shaft end is inserted. The chamber of each membrane is alternately put in communication with the pulsator output, so that the reciprocation of the shaft and hence of the slide valve is obtained.

Another example of pneumatic pulsator similar to the preceding one is disclosed in EP 1 336 335.

In pneumatic pulsators taking air from the outer environment, slots through which environmental air can directly enter the pulsator are provided on the casing. A grille or the like, generally removable, is provided inside the pulsator body in order to prevent insects or coarse particles, possibly conveyed by air, from entering the pulsator.

An example of electronic pulsator is disclosed in EP 1 731 026. Such kind of pulsator includes a body and means for alternately putting the pulsation channel in communication with a first duct communicating with a vacuum source, and with a second duct communicating with the environment. Such means essentially include a pair of elastic diaphragm valves and an electrically operated valve, and relevant ducts for putting the seat housing the first valve in communication either with the vacuum or with the outer environment. The second valve is connected to the first diaphragm valve so as to be displaceable therewith. The pulsator cover includes an entry nozzle for the clean atmospheric air arriving from a suitable pipe or directly from the environment via a filtering means.

A pulsator for milking machines on which the preamble of claim 1 is based is disclosed in US 1.891.983.

As known, pulsators are devices operating in environments that often are highly polluted by very high amounts of dust present in air and mainly consisting of flours and dry fodder intended for feeding animals. Dust is sucked by the pulsator together with air necessary for generating the cyclical alternation of the pressure signals. Such dust and any other polluting body possibly entering the pulsator are distributed along the rubber ducts connecting the pulsator to the barrels being part of the milking unit, as long as they reach the inner volumes of the chambers located between the barrels and the sheaths. Such continuous additions of dust gradually reduce the entities of the available air volumes, thereby dangerously modifying the durations of the phases forming the pulsation cycle. More precisely, the reduction of the aforesaid volumes results in the reduction of the air filling and extraction transients, since air is present in lower amounts due to the lower available volumes. The resultant reduction of such transients leads to a faster and faster cyclical pressure alternation, and this results in a sharper movement of the sheath in contact with the teat. This drawback is to be avoided since an abrupt contact sheath - teat damages the skin of the latter because of the violence of the contact impact. In order to highlight the dangers related to such ambient operating conditions, it is sufficient to mention that, in extreme cases, it has been realised that actual obstructions due to lumps of accumulated dust can occur within the pulsator. Such dust accumulations drastically reduce, and almost annul, air entry into the pulsator channels. Such a condition is lethal for the physical integrity of the animal being milked, since the atmospheric air being introduced serves to make blood circulate in the teats, and the absence of air would cause teat tumefaction due to blood staunching. Such a condition is absolutely to be avoided since it is not only troublesome, but also irreversibly damages the concerned teats. Moreover, taking into account that the operation of pneumatic pulsators generally relies on the displacement of a distributing slide valve, and hence it exploits the reciprocating sliding of a sliding valve made of plastics onto a plate suitably equipped with air admission and extraction ports, the presence of dust between such members exponentially increases the degree of wear between the parts in sliding contact. This results in a much shorter duration in time of the concerned parts, with a consequently earlier replacement.

For these reasons, considerable attempts have been made in the past in order to prevent dust from entering the pulsator, whether of pneumatic or electronic type.

The solutions adopted till now use a removable filtering member housed within the pulsator body.

According to the prior art, the filtering member can consist of a grille, a felt piece, a metal net and the like and generally it has very different shapes, since it is to fit the space available in the pulsator itself. Whatever the material the filter is made of, the filter as conceived till now is always located inside the pulsator and is isolated from the outer environment by the pulsator cover, which is equipped with suitable slots for allowing air entry into the pulsator itself. More in detail, according to the prior art, the filter occupies the front part of the pulsator and is located near the front pair of pulsation channels thereof. Moreover, the filter is located above the plate for distributing the pulsation signal and hence its entry ports for air, which at this point should not contain impurities.

The arrangement of the filtering member described above entails a number of drawbacks.

First, the amounts of thin particles that are not intercepted by the filter directly enter the above mentioned ports and hence contaminate the volumes described hereinbefore.

Second, the volume existing between filter and cover is extremely small, so that a frequent cleaning of the inner parts is necessary in order to remove the accumulated dust.

Moreover, it is impossible to visually perceive from the outside the amount of dust accumulated inside the pulsator, since the collecting chamber defined by the filter is hidden by the cover. To check the state of filter occlusion and, if necessary, to perform filter cleaning, it is therefore necessary to remove the cover by unscrewing the screws or removing the joints securing it to the remaining part of the casing. The impossibility of perceiving from the outside the need to remove dust accumulated inside the pulsator is a severe limitation of the known pulsators, in that the user is compelled to rely on his/her sensitiveness in performing the necessary checks. At present therefore the risk exists on the one side that a scarcely careful staff may delay the checks, thereby originating the above situations of damage to the animal, and on the other side that the checks are performed when they are not yet necessary, with a consequent increase in the management costs of the plant.

Further, being the filter located above or adjacent to the plate ports, whenever it is extracted for being cleaned it is possible that some of the dust accumulated becomes detached and falls then into the spaces below through the ports themselves. Such dust residuals, once they are trapped in the regions just described, can be removed only with considerable difficulty and often their removal requires disassembling almost the whole pulsator: this operation is not advisable, in order to avoid malfunctioning of the pulsator due to a subsequent incorrect assembling.

Moreover, the risk exists that the filter itself or other parts of the pulsator are lost or are not correctly assembled again during the cleaning operations.

Therefore, it is the main object of the invention to solve the problem of how to prevent dust accumulation inside the pulsator.

It is a further object of the invention to overcome the drawbacks of the prior art, by providing a pulsator which does not demand frequent maintenance.

It is a further, but not the last object of the invention to provide a pulsator that is cheap to be constructed so that it suitable for industrial production.

### Description of the invention

The above and other objects of the invention are achieved by the pulsator as claimed in the appended claims.

According to the invention, the filtering member advantageously consists of a surface exposed to sight, associated with the outer wall of the pulsator casing and preferably embodied into the cover wall. Such an arrangement advantageously allows the operator to clean the filter whenever necessary, without need to disassemble the pulsator casing or to remove the cover. The possibility of viewing the filter occlusion condition thus allows performing cleaning only when necessary, this guaranteeing an optimum operation of the pulsator in time and avoiding useless interventions.

The pulsator according to a preferred embodiment of the invention is simplified with respect to the existing pulsators thanks to the absence of the filter inside the pulsator, and yet it ensures at the same time a higher and more effective filtering power thanks to the wide filtering surface.

The inner screen, which is preferably integrated into the cover and is arranged at short distance from the atmospheric air inlet, acts as a barrier for foreign bodies possibly penetrating through the filtering portion. Such foreign
bodies, mainly consisting of dust, are deposited inside the pulsator body, in the large volume defined between the filtering portion and said screen. Thanks to
such an arrangement, it is possible to keep clean the pulsator area housing the control members for the pulsation signals and the pulsation channels.

The inner screen, vertically extending towards the interior of the pulsator so as to define a very small port for air flow with the underlying base and the inner flanks, generates a volume acting as a container for dust possibly having gone beyond the filtering channels. Advantageously, according to the invention, such a volume defines a wide collection chamber preventing dust from diffusing to the opposite side of the pulsator where the functional members, such as the slide valve and the slots for connection with the pulsation channels, are located. Such a geometrical configuration according to the invention enables maintaining the pulsator portion opposite the air inlet from the outer environment as clean as possible, even under extremely severe operating conditions, with the advantage of a long duration of the moving parts located there, and it also allows having optimum functional performance that does not change in time. Advantageously, the considerable size of the volume defined by the filtering portion and the vertical screen enables cleaning interventions very distant in time. This feature is further enhanced in that, thanks to the filtering portion having small size channels, only thin particles having passed beyond said filtering portion are present in said volume, whereas also particles of considerably greater granulometry are present in the inner portion of conventional pulsators, since the slots formed on the cover lack any filtering power. Consequently, conventional pulsators become much more rapidly clogged.

A further advantage of the invention is that the arrangement of the filtering portion on the surface, i.e. on the outer wall of the pulsator, allows defining a widened filtering surface with respect to conventional inner filters. In a preferred embodiment, such a widening is 30% or even more. This important advantage allows attaining a greater filtering endurance and hence making cleaning interventions less frequent.

According to the invention, the filtering surface may be integrated into the pulsator cover and it is preferably made smooth and without projecting portions. Thanks to such an arrangement, dust accumulated on the filtering portion can be easily removed by hands, for instance by passing a finger on it. It has been realised that the manually removed dust falls outside the pulsator, without risk of accumulation in the regions inside the filtering portion. Moreover, in order to perform cleaning, it is not necessary to disassemble any portion of the pulsator and thus the risk of accidentally losing screws or other components or of damaging elements of the pulsator is eliminated.

According to a preferred embodiment of the invention, the pulsator has no inner filter and hence it does not demand maintenance interventions for replacing or cleaning such an inner filter.

### Brief Description of the Figures

Some preferred embodiments of the invention will be described by way of non limiting examples with reference to the accompanying drawings, in which:

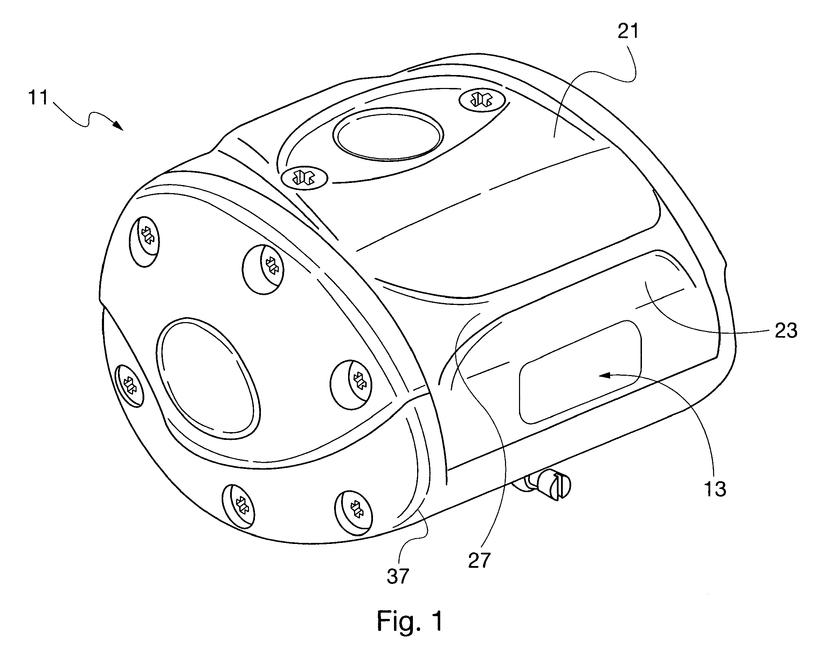

- Fig. 1 is a perspective rear view of a pneumatic pulsator according to a preferred embodiment of the invention;

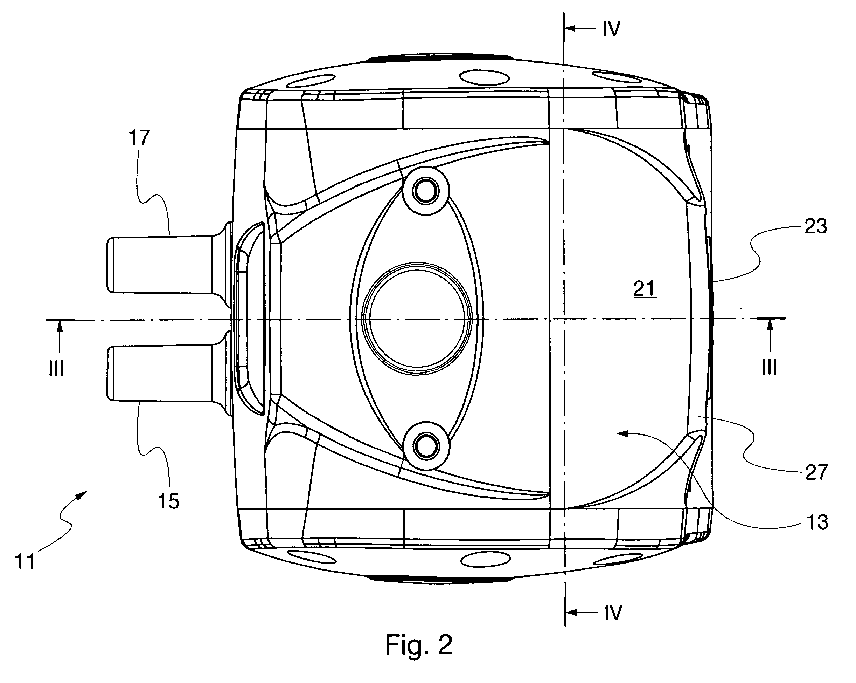

- Fig. 2 is a top view of the pulsator shown in Fig. 1;
- Fig. 3 is a cross-sectional view taken along line III-III in fig. 2;

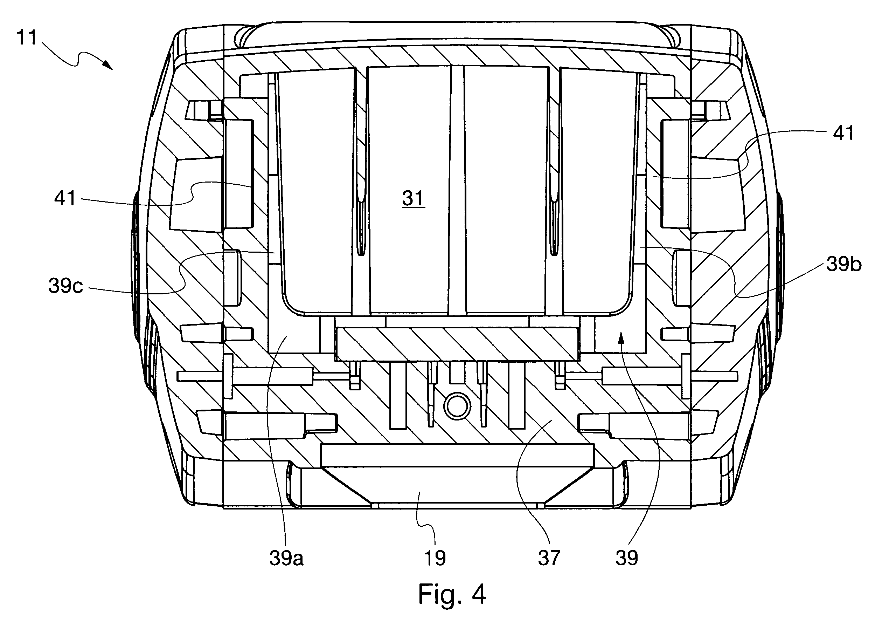

- Fig. 4 is a cross-sectional view taken along line IV-IV in fig. 2;

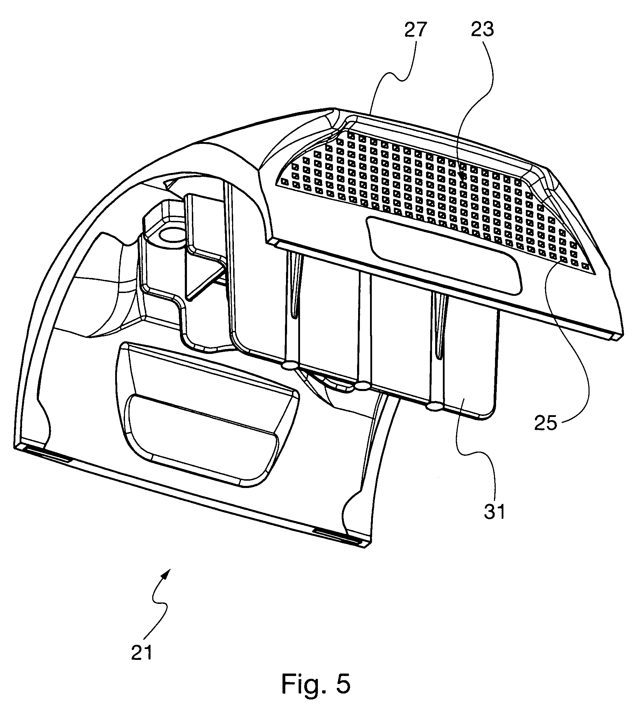

- Fig. 5 is a perspective rear view from below of the cover of the pulsator shown in Fig. 1;

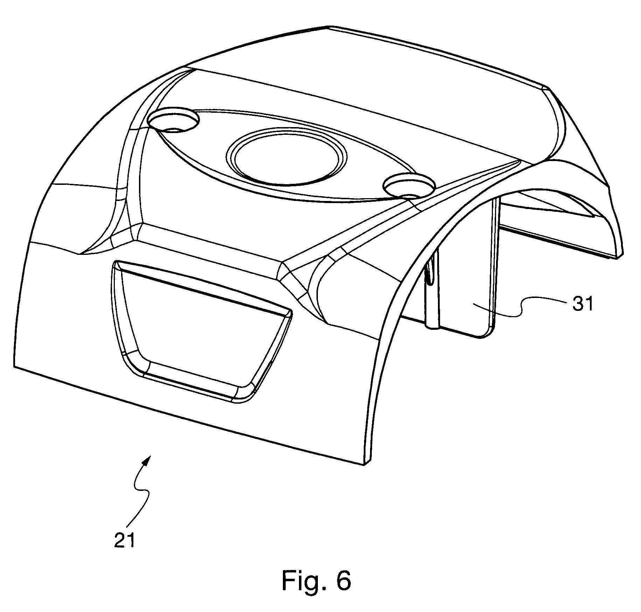

- Fig. 6 is a perspective front view from above of the cover of the pulsator shown in Fig. 1;

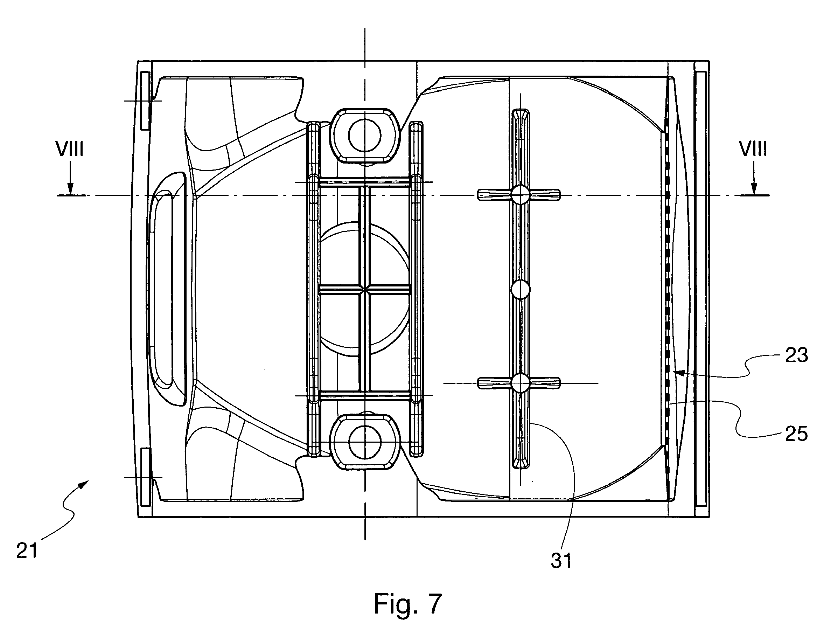

- Fig. 7 is a view from below of the cover of the pulsator shown in Fig. 1;

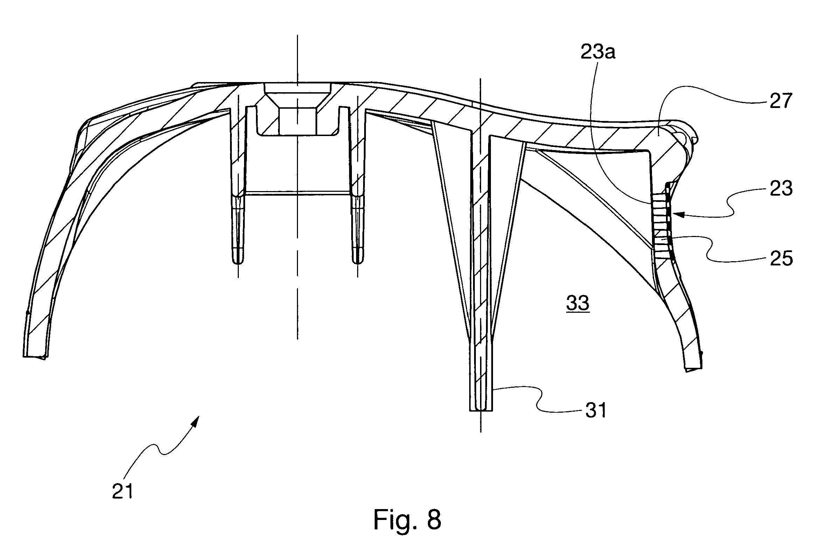

- Fig. 8 is a cross-sectional view taken along line VIII-VIII in Fig. 7.

### Description of a preferred embodiment

Referring to the accompanying drawings, there is shown a pulsator for milking plants made in accordance with a preferred embodiment of the invention.

The illustrated pulsator is, by way of example, a pneumatic pulsator and is generally identified by reference numeral 11.

Pulsator 11 has an outer casing 13 from which exit channels (two in the illustrated example), denoted 15 and 17, project, said channels housing the devices controlling the transmission of the pulsation signals.

Pulsator 11 of the illustrated example further has in its bottom part a dovetail groove 19 for applying pulsator 11 to a conventional slide support.

Further, outer casing 13 preferably comprises a cover 21, which is removable for allowing access to the pulsator interior. In the illustrated example, cover 21 is convex in order to match the slender profile of the pulsator body, yet said body and said cover could also have different shapes.

According to the invention, the outer wall of casing 13 and preferably the outer wall of cover 21 defines a portion 23 overlooking the environment outside the pulsator and intended for atmospheric air admission into casing 13, said portion 23 being a filtering portion.

Still according to the invention, said filtering portion 23 is arranged to separate atmospheric air entering the pulsator from possible unwanted particles, for instance of dust, preventing entry thereof into the pulsator body.

In accordance with a preferred embodiment of the invention, filtering portion 23 includes a plurality of channels 25 with reduced cross-sectional size, directly communicating with the outer environment, for air admission into the pulsator.

Preferably moreover filtering portion 23 has a surface area of at least about 10 mm².

Advantageously, according to the invention, filtering portion 23 includes a plurality of channels 25 with such a cross-sectional size and length that a further filtering grille or other filtering device is not required inside pulsator 11.

Always in accordance with a preferred embodiment of the invention, channels 25 have a cross section whose maximum width is below 1 mm.

In accordance with a preferred embodiment of the invention, at least ten channels, more preferably at least one hundred, e.g. two hundred channels are provided, having a square or rectangular cross section whose sides are preferably less than 1 mm long, for instance a cross section of about 0.7 x 0.8 mm. Preferably moreover channels 25 are substantially identical, however they could have different sizes and shapes depending on their location on filtering portion 23. Preferably channels 25 have substantially the same length, substantially equal to the thickness of portion 23 of the wall where they are formed, preferably in cover 21, but clearly they could also have different lengths, for instance when the thickness of the material is not uniform.

Filtering portion 23 thus substantially defines a filtering grille when channels 25 are located close to each other, as in the illustrated example. However, channels 25 could even be scattered over a wide area of casing 13, in particular of cover 21, and be mutually spaced apart.

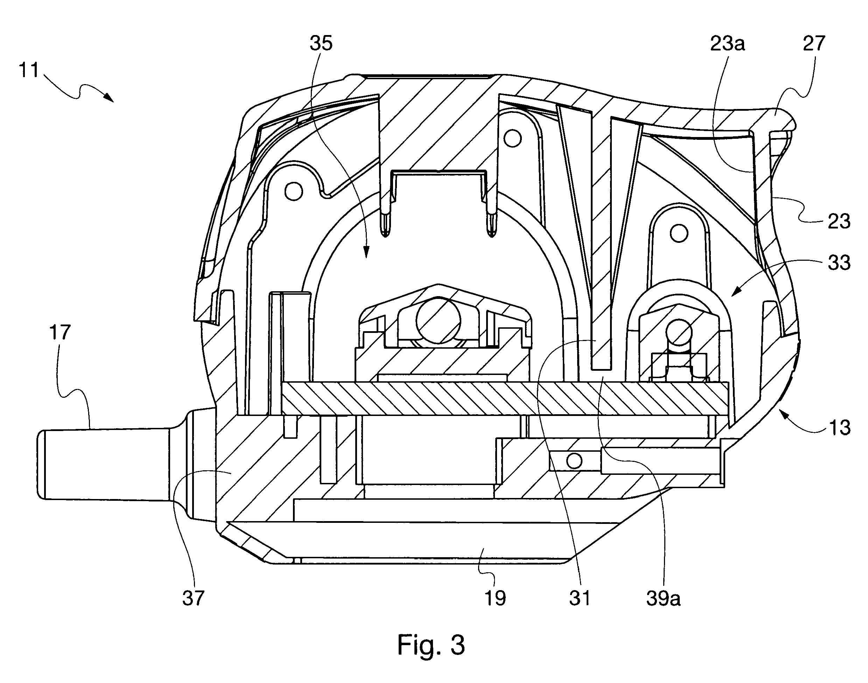

Preferably, filtering portion 23 is protected against possible dripping by a horizontal rib 27 located just above the filtering portion. Horizontal rib 27 substantially acts as a gutter for moisture that possibly is formed on the outer surface of cover 21 and that, should the gutter be lacking, could penetrate into filtering portion 23. Actually, pulsator 11 is generally installed according to the orientation shown in Fig. 3, that is with groove 19 directed downwards and cover 21 directed upwards.

According to the invention, filtering portion 23 is to prevent insects or particles of dust and dirt, possibly conveyed by air, from entering the interior of pulsator 11.

If the milking plant has a clean air source available (as known, air in a milking shed does not always possess this characteristic), it could be also possible to provide means for associating filtering portion 23 with a nozzle for connection to the flexible conduit coming from the clean air source.

Still according to the invention, a screen 31 is provided inside pulsator 11, opposite inner face 23a of filtering portion 23. Screen 31 substantially vertically extends inside pulsator 11 and, in the illustrated example, it is rigidly connected with cover 21, being made integrally therewith. According to the invention, a collection chamber 33 is advantageously defined between inner face 23a of filtering portion 23 and screen 31 and particles, if any, having passed through filtering portion 23 and being intercepted by screen 31 deposit by gravity in said chamber. In the preferred exemplary embodiment illustrated, screen 31 is spaced apart by about 20 mm from inner face 23a of filtering portion 23. A spacing in the range of about 10 to 30 mm is an ideal choice in order to define a sufficiently large chamber 33 without increasing the overall pulsator size.

Always referring to the exemplary embodiment illustrated, filtering portion 23 and screen 31 are advantageously located in the rear part of pulsator 11, which is arranged on the opposite side with respect to the devices controlling the transmission of the pulsation signals, generally denoted by reference numeral 35, and to the output channels 15, 17 for the pulsation signal. Such an arrangement is the preferred embodiment of the invention, since dust collected in collection chamber 33 is advantageously separated from said devices 35. However, other embodiments are possible, in which filtering portion 23 and screen 31 are located on the same side as devices 35.

Said control devices 35 may be for instance of the kind disclosed in document EP 1 336 335, concerning pneumatic pulsators, or in document EP 1 731 026, concerning electronic pulsators.

Preferably, screen 31 extends substantially parallel to filtering portion 23 and extends towards base 37 of pulsator 11 so as to leave a port 39 through which air passes. Said port 39 preferably extends both downwards, between screen 31 and base 37 (portion 39a of port 39) and laterally, between screen 31 and inner side flanks 41 of the pulsator (portions 39b, 39c of port 39). Thus, in the preferred embodiment of the invention, port 39 is generally U-shaped. Moreover, port 39 will be preferably a few millimetres, for instance 3 to 5 mm, wide.

## Claims

1. A pulsator (11) for milking plants, comprising a casing (13) enclosing the devices (35) controlling the transmission of the pulsation signals, the outer wall of said casing (13) defining a filtering portion (23) consisting of a surface exposed to sight, associated with the outer wall of the pulsator casing, overlooking the environment outside the pulsator for atmospheric air admission into the casing, **characterized in that** a screen (31) is provided inside the pulsator (11), opposite the inner face (23a) of the filtering portion (23), and wherein a collection chamber (33), in which particles, if any, having passed through the filtering portion (23) deposit by gravity, is defined between the inner face (23a) of filtering portion (23) and the screen (31).

2. The pulsator as claimed in claim 1, wherein the filtering portion (23) includes at least ten channels (25) with reduced cross-sectional size for air admission into the pulsator.

3. The pulsator as claimed in claim 2, wherein the channels (25) have a maximum width below 1.00 mm.

4. The pulsator as claimed in claim 2, wherein at least hundred channels (25) are provided.

5. The pulsator as claimed in any preceding claim, wherein a removable cover (21) for allowing access to the pulsator interior is provided, and wherein the filtering portion (23) is formed on the outer wall of said cover (21).

6. The pulsator as claimed in claim 6, wherein the filtering portion (23) and the screen (31) are located in the part of the pulsator (11) arranged on the opposite side of the devices (35) controlling the transmission of the pulsation signals and of the output channels (15, 17) for the pulsation signals.

7. The pulsator as claimed in claim 6 or 7, wherein the screen (31) is substantially parallel to the filtering portion (23) and extends inside the pulsator towards the base (37) of the pulsator (11), so as to leave a port (39) for air passage.

8. The pulsator as claimed in claim 7, wherein said port (39) extends both between the screen (31) and the base (37) of the pulsator and laterally between the screen (31) and the inner side flanks (41) of the pulsator, thereby generally taking a "U" shape.

9. The pulsator as claimed in any preceding claim, including a single filtering member for the atmospheric air, said single filtering member consisting of the filtering portion (23) defined in said casing (13).

10. The pulsator as claimed in claim 1, wherein screen (31) is spaced apart by about 10 to 30 mm from inner face (23a) of filtering portion (23).

11. The pulsator as claimed in claim 1, wherein filtering portion (23) and screen (31) are located in the rear part of pulsator (11), which is arranged on the opposite side with respect to the devices controlling the transmission of the pulsation signals (35), and to the output channels (15, 17) for the pulsation signal.

12. The pulsator as claimed in claim 1, wherein filtering portion (23) and screen (31) are located on the same side as devices controlling the transmission of the pulsation signals (35).

13. The pulsator as claimed in claim 7, wherein port (39) is from 3 to 5 mm, wide.

## Patentansprüche

1. Pulsator (1) für Melkanlagen, mit einem Gehäuse (13), das die Vorrichtungen (35) zum Steuern der Übertragung der Pulsationssignale umschließt, wobei die Außenwand des Gehäuses (13) einen Filterabschnitt (23) definiert, der aus einer der Betrachtung ausgesetzten Fläche besteht, mit der äußeren Wand des Pulsatorgehäuses verbunden ist und der Umgebung außerhalb des Pulsators für den Einritt von Umgebungsluft in das Gehäuse zugewandt ist, **dadurch gekennzeichnet, dass** in dem Pulsator (11) ein Schirm (31) angeordnet ist, der der Innenseite (23a) des Filterabschnitts (23) gegenüberliegt, und wobei eine Sammelkammer (33), in der gegebenenfalls vorhandene Partikel, die durch den Filterabschnitt (23) hindurchgelangt sind, durch Schwerkraft abgeschieden werden, zwischen der Innenfläche (23a) des Filterabschnitts (23) und dem Schirm (31) gebildet ist.

2. Pulsator nach Anspruch 1, wobei der Filterabschnitt (23) wenigstens zehn Kanäle (25) mit induzierter Querschnittsgröße zum Lufteinlass in den Pulsator aufweist.

3. Pulsator nach Anspruch 2, wobei die Kanäle (25) eine Maximalweite von weniger als 1,00 mm haben.

4. Pulsator nach Anspruch 2, wobei wenigstens hundert Kanäle (25) vorhanden sind.

5. Pulsator nach einem der vorstehenden Ansprüche, wobei eine abnehmbare Abdeckung (21) vorhanden ist, um Zugang zum Innenraum des Pulsators zu ermöglichen, und wobei der Filterabschnitt (23) an der äußeren Wand der Abdeckung (21) ausgebildet ist.

6. Pulsator nach Anspruch 6, wobei der Filterabschnitt (23) und der Schirm (31) in einem Teil des Pulsators (11) angeordnet sind, der auf der gegenüberliegenden Seite der Vorrichtungen (35), welche die Übertragung von Pulsationssignalen steuern, und der Ausgangskanäle 15, 17 für die Pulsationssignale ist.

7. Pulsator nach Anspruch 6 oder 7, wobei der Schirm (31) im Wesentlichen parallel zu dem Filterabschnitt (23) ist und sich in dem Pulsator zu der Basis (37) des Pulsators (11) hin erstreckt, sodass ein Durchgang (39) für den Durchzug von Luft frei bleibt.

8. Pulsator nach Anspruch 7, wobei der Durchgang (39) sich sowohl zwischen dem Schirm (31) und der Basis (37) des Pulsators erstreckt und lateral zwischen dem Schirm (31) und der inneren Seitenflanke (41) des Pulsators erstreckt, wodurch er im Wesentlichen eine U-Form erhält.

9. Pulsator nach einem der vorstehenden Ansprüche, mit einem einzelnen Filterglied für Umgebungsluft, wobei das einzelne Filterglied aus dem Filterabschnitt (23) besteht, der durch das Gehäuse (13) gebildet wird.

10. Pulsator nach Anspruch 1, wobei der Schirm (31) etwa 10 bis 30 mm von der Innenfläche (23a) des Filterabschnitts (23) entfernt angeordnet ist.

11. Pulsator nach Anspruch 1, wobei der Filterabschnitt (23) und der Schirm (31) in einem hinteren Abschnitt des Pulsators (11) angeordnet sind, der auf der gegenüberliegenden Seite Bezug auf die Vorrichtungen zum Steuern der Übertragung von Pulsationssignale (35) und die Ausgangskanäle (15, 17) für das Pulsationssignal angeordnet sind.

12. Pulsator nach Anspruch 1, wobei der Filterabschnitt (23) und der Schirm (31) auf derselben Seite wie die Vorrichtungen zum Steuern der Übertragung der Pulsationssignale (35) angeordnet sind.

13. Pulsator nach Anspruch 7, wobei der Durchgang (39) 3 bis 5 mm breit ist.

## Revendications

1. Pulsateur (11) pour des installations de traite, comprenant un boîtier (13) renfermant les dispositifs (35) commandant la transmission des signaux de pulsation, la paroi externe du boîtier (13) définissant une portion de filtration (23) constituée d'une surface exposée à la vue, associée à la paroi externe du boîtier du pulsateur, donnant sur l'environnement à l'extérieur du pulsateur pour une admission d'air atmosphérique dans le boîtier, **caractérisé en ce qu'**une cloison (31) est prévue à l'intérieur du pulsateur (11), à l'opposé de la face interne (23a) de la portion de filtration (23), et dans lequel une chambre de collecte (33), dans laquelle des particules, le cas échéant, ayant traversé la portion de filtration (23) se déposent par gravité, est définie entre la face interne (23a) de la portion de filtration (23) et la cloison (31).

2. Pulsateur selon la revendication 1, dans lequel la portion de filtration (23) comprend au moins dix canaux (25) de taille en coupe transversale réduite pour une admission d'air dans le pulsateur.

3. Pulsateur selon la revendication 2, dans lequel les canaux (25) ont une largeur maximale en dessous de 1,00 mm.

4. Pulsateur selon la revendication 2, dans lequel au moins cent canaux (25) sont prévus.

5. Pulsateur selon l'une quelconque des revendications précédentes, dans lequel un couvercle amovible (21) permettant l'accès à l'intérieur du pulsateur est prévu, et dans lequel la portion de filtration (23) est formée sur la paroi externe dudit couvercle (21).

6. Pulsateur selon la revendication 5, dans lequel la portion de filtration (23) et la cloison (31) sont situés dans la partie du pulsateur (11) agencée sur le côté opposé des dispositifs (35) commandant la transmission des signaux de pulsation et des canaux de sortie (15, 17) pour les signaux de pulsations.

7. Pulsateur selon l'une quelconque des revendications 5 ou 6, dans lequel la cloison (31) est sensiblement parallèle à la portion de filtration (23) et s'étend à l'intérieur du pulsateur vers la base (37) du pulsateur (11), de façon à laisser un orifice (39) pour le passage de l'air.

8. Pulsateur selon la revendication 7, dans lequel ledit orifice (39) s'étend à la fois entre la cloison (31) et la base (37) du pulsateur et latéralement entre la cloison (31) et les flancs latéraux internes (41) du pulsateur, prenant ainsi généralement la forme d'un « U ».

9. Pulsateur selon l'une quelconque des revendications précédentes, comprenant un élément de filtration unique pour l'air atmosphérique, ledit élément de filtration unique étant constitué de la portion de filtration (23) définie dans ledit boîtier (13).

10. Pulsateur selon la revendication 1, dans lequel la cloison (31) est espacée d'environ 10 à 30 mm de la face interne (23a) de la portion de filtration (23).

11. Pulsateur selon la revendication 1, dans lequel la portion de filtration (23) et la cloison (31) sont situés dans la partie arrière du pulsateur (11), qui est agencée sur le côté opposé par rapport aux dispositifs commandant la transmission des signaux de pulsation (35), et aux canaux de sortie (15, 17) pour le signal de pulsation.

12. Pulsateur selon la revendication 1, dans lequel la portion de filtration (23) et la cloison (31) sont situés du même côté que les dispositifs commandant la transmission des signaux de pulsation (35).

13. Pulsateur selon la revendication 7, dans lequel l'orifice (39) a une largeur de 3 à 5 mm.
